# EUROPEAN PATENT SPECIFICATION

(11) **EP 1 081 002 B1**
(45) Date of publication and mention of the grant of the patent: **05.11.2003**
(21) Application number: 00118847.3
(22) Date of filing: 31.08.2000
(51) Int. Cl.: B60R 25/04

(54) **Method of preventing car thefts**
Verfahren zum Verhindern eines Fahrzeugdiebstahls
Procédé pour empêcher le vol d'un véhicule

(30) Priority: 03.09.1999 JP 25084499
(43) Date of publication of application: 07.03.2001
(73) Proprietor: Kabushiki Kaisha MORIC, Shizuoka-ken (JP)
(72) Inventor: Enoyoshi, Masahiko, c/o Moriyama Kogyo K. K., Shuuchi-gun, Shizuoka-ken (JP); Yamamoto, Masayuki, c/o Moriyama Kogyo K. K., Shuuchi-gun, Shizuoka-ken (JP); Isoda, Naoya, c/o Moriyama Kogyo K. K., Shuuchi-gun, Shizuoka-ken (JP)
(74) Representative: Leson, Thomas Johannes Alois, Dipl.-Ing.

(56) References cited:
- EP-A- 0 704 354
- FR-A- 2 753 493
- FR-A- 2 753 666
- FR-A- 2 754 226

## Description

### [Detailed Description of the Invention]

This invention relates to a method and a device for preventing car thefts by which engine starting is prohibited with keys having no ID code that has been registered in a controller in a vehicle body.

An anti-car theft device is known in which a key cylinder and a controller are mounted on a vehicle body; for a key inserted in the key cylinder for turning on the main switch, communication is performed between an antenna mounted on the vehicle body and a transponder (transmission element) fitted in the key to determine an ID code of the key; and engine starting is allowed when the ID code coincides with an ID code which has been registered (stored) in the controller.

For example, FR-A-2 753 666 discloses a thief-proof engine ignition control device for a vehicle which matches an ID code of a key with an ID code stored in a memory unit and permits functioning of the engine if the ID code of the key coincides with the stored ID code.

In such a device, the antenna is typically built in the key cylinder, and an electric wave is transmitted from this antenna to the built-in transponder in the key to supply a given amount of electric power. When a certain amount of charge in the transponder is reached, the transponder sends back a proper ID code to the antenna. The controller allows engine starting if the ID code coincides with a registered one, but prohibits engine starting for prevention of car theft if the ID code does not coincide with the registered one.

In the controller, a microcomputer (CPU) is provided to process various operations such as a determination of the ID code, a verification of the ID code, registration and deletion of the ID code. The computer also operates engine controls such as the control of the engine power and the ignition timing control. However, the computer resets and restarts the operations from the beginning when the computer gets noise occurring during the running and from the circumstance or when the source voltage is temporary fallen somehow. In other words, the computer determinates or verifies the ID code again. Also, it is possible somehow to output the command for the determination of the ID code during the normal running.

In such cases, a signal permitting an engine to start (ignition permitting signal) is lost in the meantime, resulting in an engine misfire for a short time corresponding thereto and the reduction in engine speed. It causes a problem such that the engine operation is not smooth and it is therefore not comfortable to ride in the vehicle.

In view of these circumstances the invention has been made and the first object of the invention is to provide a method of preventing car-thefts for preventing the engine operation from being interfered in the meantime or reduced in engine speed, thereby to improve conform to ride, even if, due to any noise generated during a vehicle run, a computer mounted is reset or a command is generated to determine identification codes. The second object of the invention is to provide a device to be directly used to embody the method above.

According to this invention, the above objects are achieved by a method and device as defined in the attached claims.

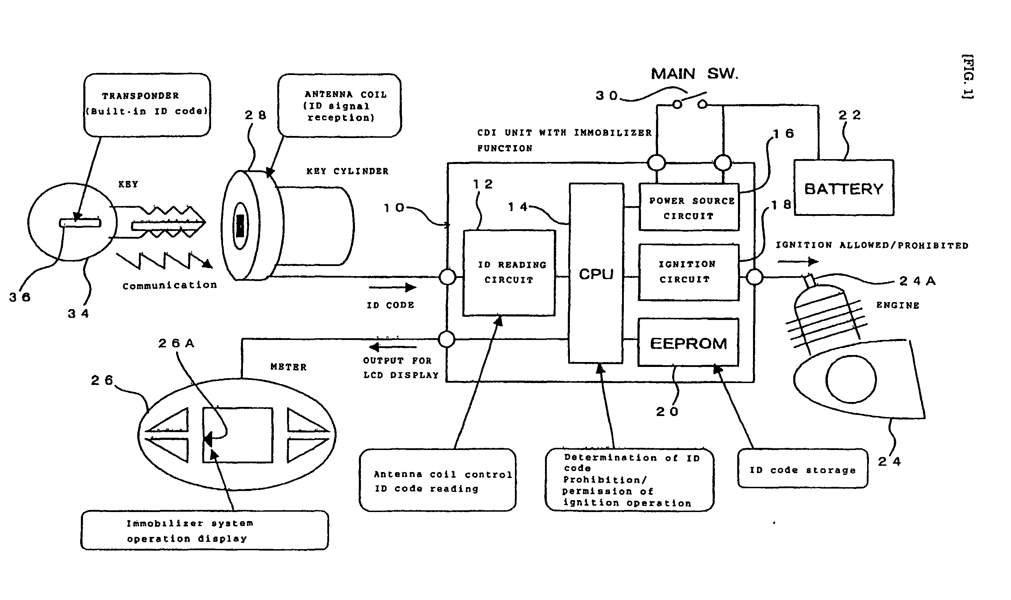

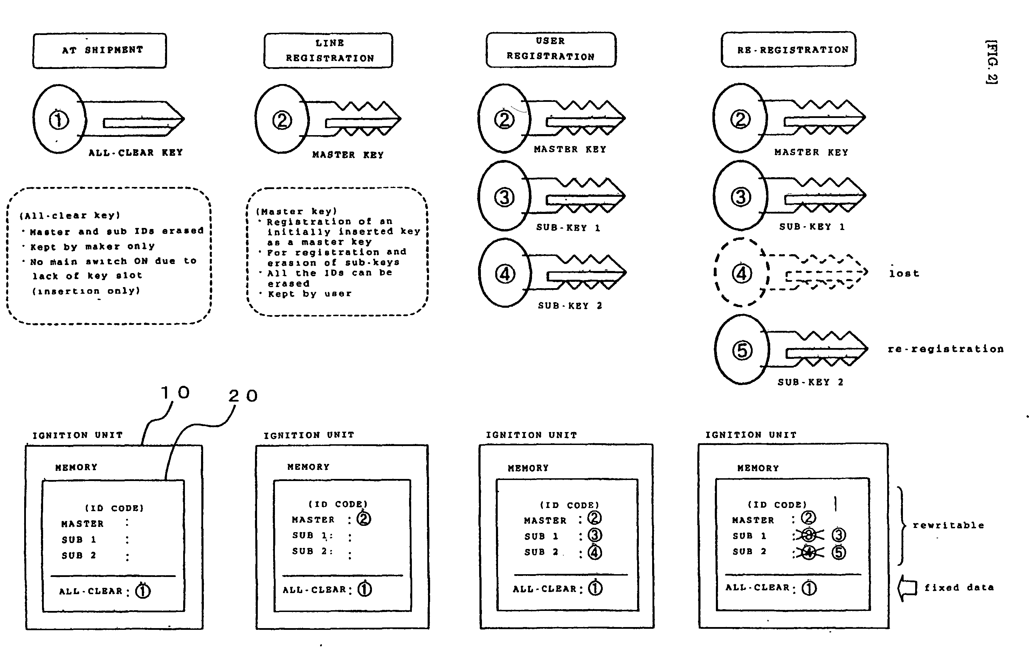

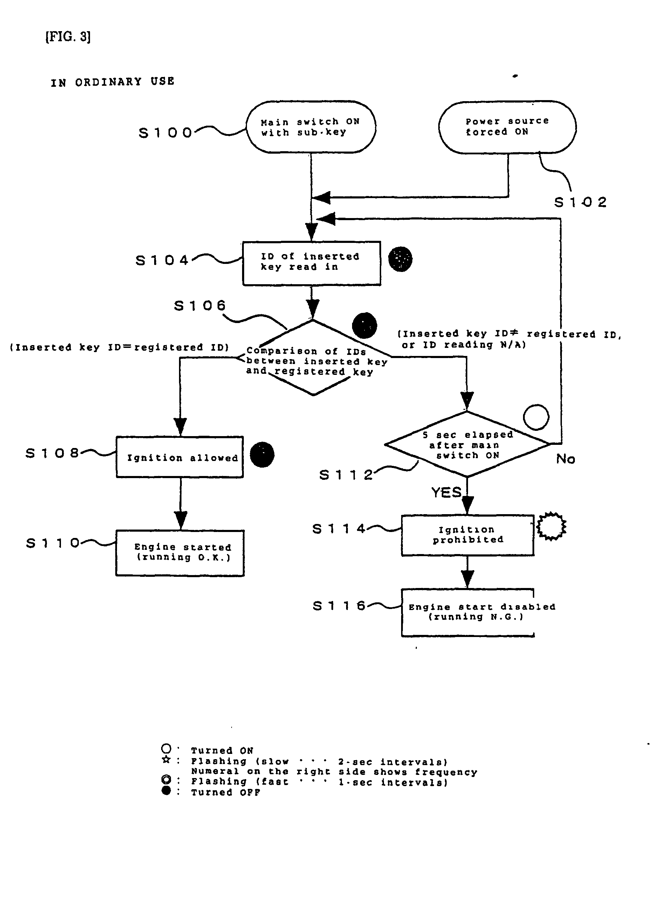

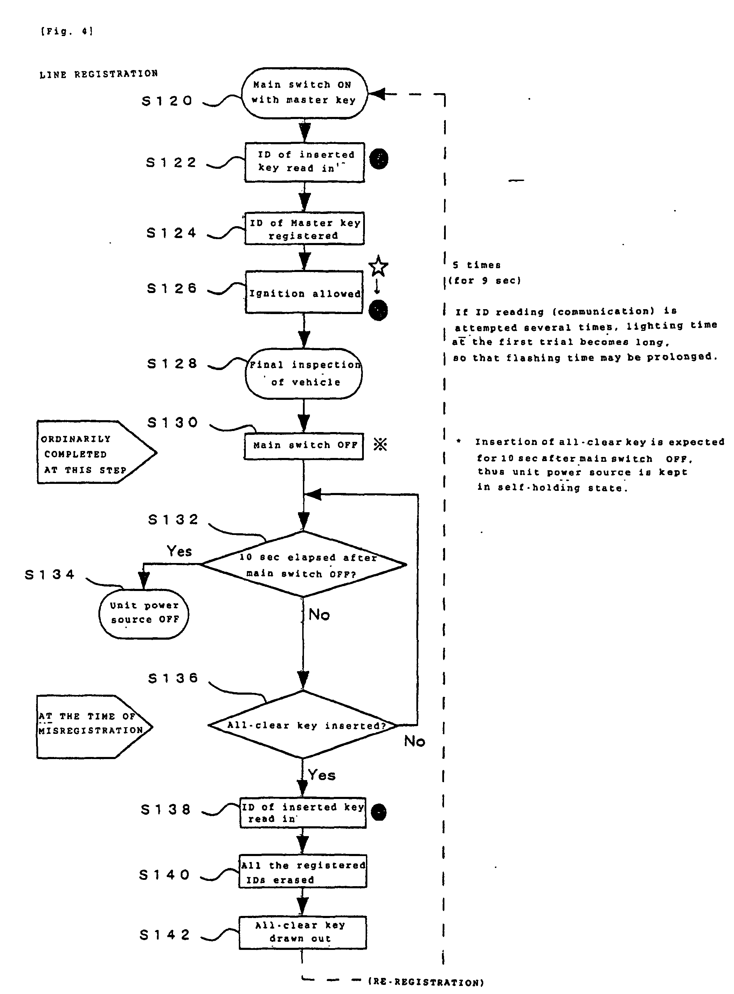

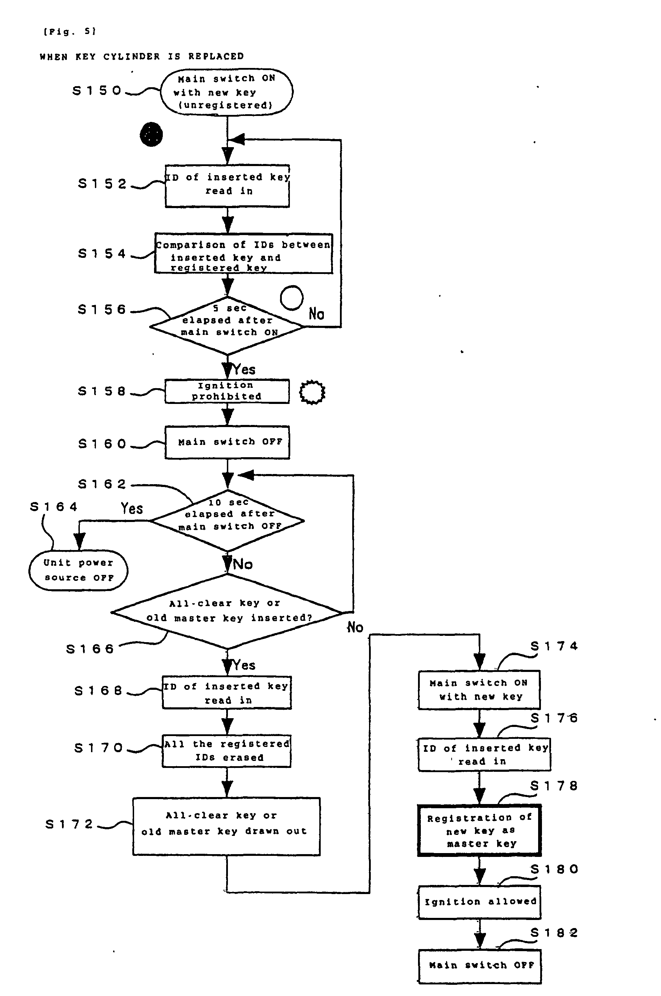

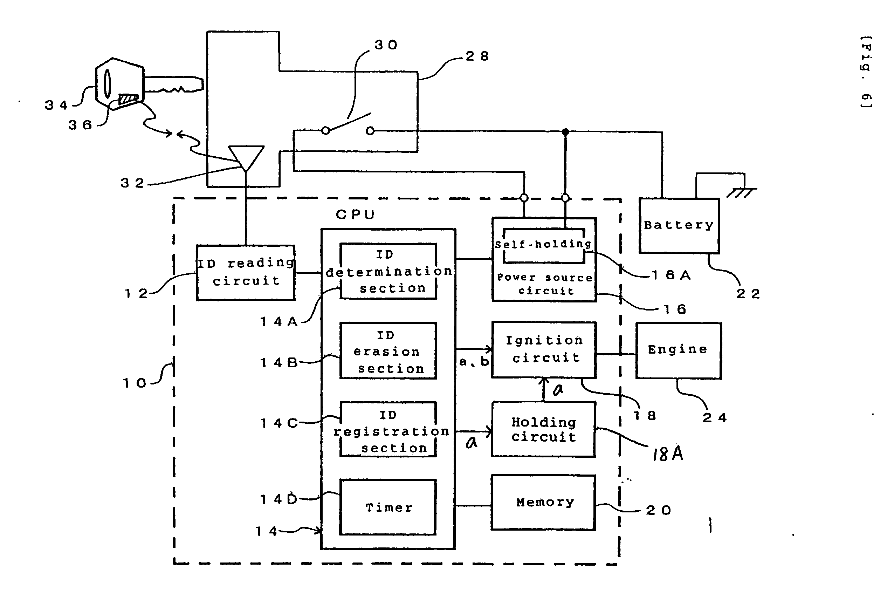

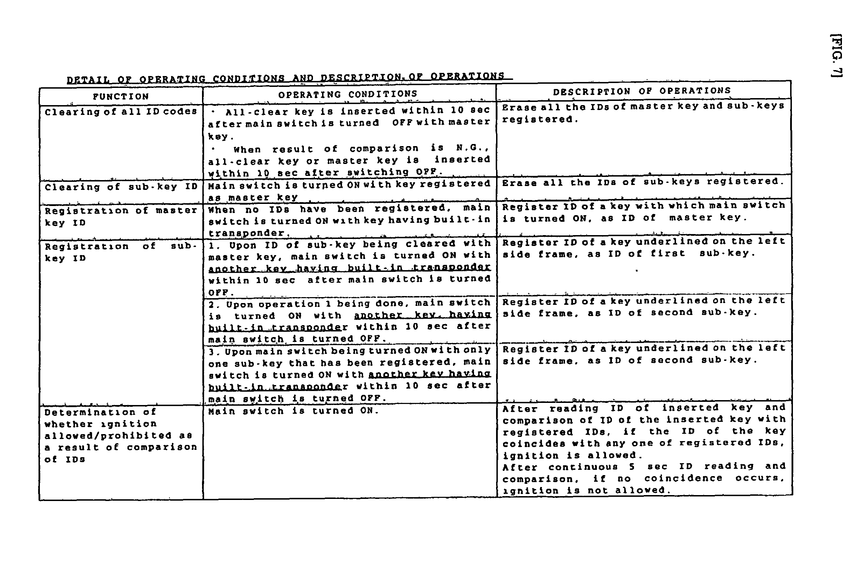

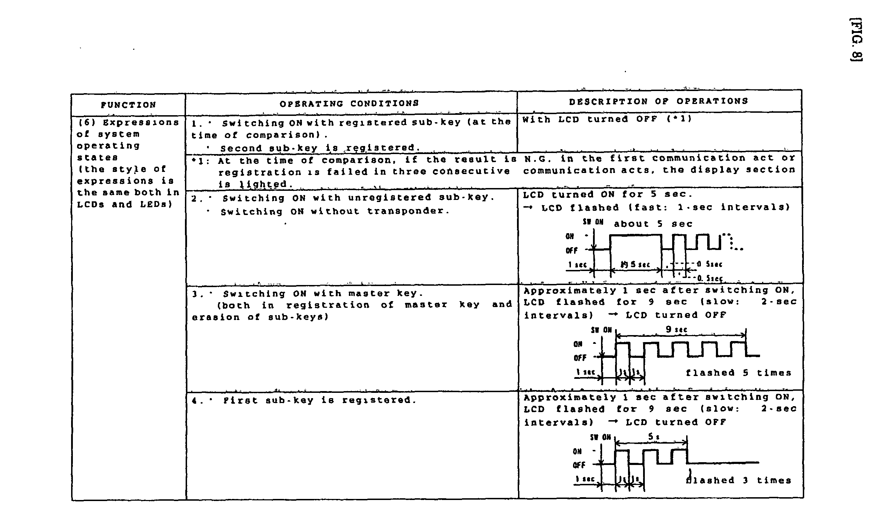

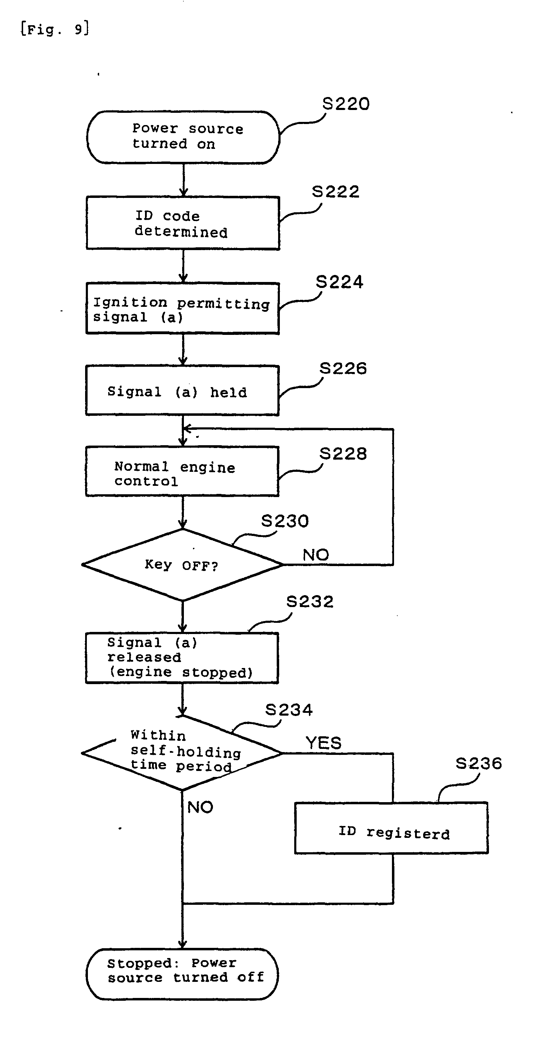

Fig. 1 is a view showing the basic structure of a system according to an embodiment of this invention; Fig. 2 a view showing a concept of registration and erasing operations of ID codes; Fig. 3 a flow diagram of operations in the ordinary use; Fig. 4 a flow diagram of operations in registration of a master key; Fig. 5 a flow diagram of operations in registering the master key when the key cylinder is replaced; Fig.6 a view showing the structure of a controller; Fig.7 a comparative table of operating conditions and description of operations for various functions; Fig.8 a comparative table of the operating states of the system and their expressions; and Fig.9 a view showing the operation flow diagram in which a holding operation by an ignition permitting signal (a).

First, the basic structure will be described with reference to Figs. 1-6, in which numeral 10 designates a controller, which comprises an ID reading circuit 12, a CPU (microcomputer) 14, a power source circuit 16, an ignition circuit 18 and a memory 20 made up of an EEPROM (electrically erasable programmable read-only memory) etc.
This controller 10 has the function of prohibiting engine starting (referred to as immobilizer function) to a key 34 having no ID code which has been registered upon communication between the controller and a built-in transponder 36 of the key.

Numeral 22 designates a battery, which supplies power to the power source circuit 16 through a main switch (represented by main SW in the figure) described later. The power source circuit 16 supplies sections of the controller 10 with respective voltages. The power source circuit 16 contains a self-holding circuit 16A capable of continuing operation of the power source circuit 16 for a given length of time even if the main switch 30 is turned off (Fig. 6)

An ignition permitting signal (a) is inputted to said ignition circuit 18 from a holding circuit 18A for holding the ignition permitting signal (a) described hereinafter, and then the ignition circuit 18 operates according to the ignition permitting signal (a). Once the ignition permitting signal (a) is inputted, the holding circuit holds it until the main switch is selected to 'OFF.'

Numeral 12 designates an engine and the ignition circuit 18 is comprised of a CDI (capacitor discharging ignition device) etc. The ignition circuit 18 generates a spark at an ignition plug 24A of the engine 24 according to an ignition signal determined under operating conditions by an ignition timing control section (not shown) in the CPU 14. The structure of the ignition circuit 18 should be changed depending on the type of engine 24, and when an electric motor is employed for the engine 24, for example, the ignition circuit 18 may be constituted by an electric circuit, such as a PWM (pulse width modification) control circuit, which is capable to change drive force of the motor. In this invention, the engine 24 is characterized by a wide sense including an electric motor etc and the ignition circuit 18 constitutes the engine control section of the invention.

The memory 20 stores ID codes or other various kinds of data, and no stored information is erased even when the power supply is cut off (main switch 30 may be turned off). However, as described later, under a certain condition, for example, when an all clear key is used, or at the time of re-registration of a master key or sub-keys, all (ID codes of the master key and sub-keys) or some (ID codes of sub-keys) of the ID codes other than the one of the all-clear key can be erased electrically. The ID code of the all-clear key is stored unerasable as a fixed data, as described above.

In Fig. 1, Numeral 26 represents an indicator using LCDs or LEDs, which has not only meters, such as a speed meter etc, for ordinary running, but also an operation display section 26A which indicates warnings and immobilizer system operations as described later.

Numeral 28 represents a key cylinder, which contains the main switch 30 and an antenna 32 (see FIg.6). Numeral 34 represents a key, in the stem of which is embedded a transponder 36. Keys 34 with a transponder includes one master key, a sub-key 1 and a sub-key 2, but are generally referred to simply as a key 34. Also, an all-clear key is used as a special key 34, and functions of these keys 34 are described later.

When a key 34 other than the all-clear key is inserted in a key cylinder 28 and the main switch is turned on, then the power source circuit 16 begins operating and the controller 10 is activated. The ID reading circuit 12 then sends an electric wave to the key 34 through the antenna 32 by radio. When a given amount of power is stored in the transponder 36, it sends back a proper ID code to the antenna 32. The ID reading circuit 12 decodes the ID code signal and sends it to the CPU 14.

The CPU 14 has functions of an ID determination section 14A, an ID erasing section 14B, an ID registration section 14C, a timer 14D and other sections such as an ignition timing control section etc. These functions are actually constituted by pieces of software. The ID determination section 14A compares an ID code read in the ID reading circuit 12 with an ID code registered in the memory 20, and if the ID code read in the ID reading circuit 12 is determined to be the registered one in the memory 20, a signal for allowing engine starting (ignition permitting signal) (a) is sent to the holding circuit 18A. Once the holding circuit 18A receives the signal (a), it continues to send this signal (a) to the ignition circuit (a) until the main switch 30 is selected to 'OFF". If the ID code read in the ID reading circuit 12 does not coincide with the registered one in the memory 20, a signal which prohibits engine starting (ignition prohibiting signal) is sent to the ignition circuit 18.

The ID erasing section 14D, as described later, erases all or some of the ID codes other than the one of the all-clear key from the memory 20 at the time of alteration or re-registration of the ID codes. The ID registration section 14 registers a new ID code in the memory 20.

The controller 10 registers the ID code of the all-clear key in the memory 20 as a fixed data, which is unerasable. In the controller 10, when no other ID codes, that is, no ID codes of the master key, the sub-key 1 and the sub-key 2 are stored in the memory 20, a key 34 with a transponder which is used initially, is registered as a master key, and keys 34 with a transponder which are subsequently inserted successively according to a certain procedure, are registered as a sub-key 1 and sub-key 2, respectively.

Ordinarily, the sub-key 1 and the sub-key 2 are used. In this case, operation is shown in Fig. 3. First, the sub-key 1 or the sub-key 2 is inserted in the key cylinder 28 to be turned, causing the main switch 30 to be turned on (step S100 in Fig. 3). Then, the power source circuit 16 is forced on (step S102), and the controller 10 is activated. Then, the ID reading circuit 12 reads the ID code of the inserted sub-key (step S104), and the ID determination section 14A determines whether or not the ID code of the sub-key has been registered in the memory 20 (step S106).

IF the ID code of the inserted sub-key is a registered one, the sub-key is determined to be a regular one, an ignition permitting signal (a) is sent to the ignition circuit 18 through the holding circuit 18A (step S108), enabling the engine 24 to start (step S110). As a result, the vehicle is enabled to run. Since operation during steps S100-S110 are normal, no warnings are indicated on the operation display section 26A of the indicator 26. That is, the operation display section 26A made of LCDs or LEDs for indicating operations of the immobilizer system is neither turn on nor flashed.

If the ID code of the inserted sub-key has not been registered in the memory 20 (step S106), while the elapsed time is within 5 sec after the main switch 30 has been turned on, the operation display section 26A is lighted continuously for a given time (5 sec) (step S114), and thereafter flashed at short time intervals (period of 1 sec) (step S114), disabling engine starting (step S116). Operations in the operation display section 26 are shown in Fig. 8 by OPERATING CONDITION (2). This condition can be cancelled if the main switch 30 is turned on with a regular key 34.

Now, the procedure of registration or alteration of the master key is described with reference to Fig. 4. This procedure is usually performed when the vehicle is shipped from the factory. Here, all-clear key is used for a "key with a particular ID code" used in alteration of the master key. First, no ID codes of the master key and sub-keys have registered in the memory 20. The ID code of the all-clear key is stored as a fixed data in the memory 20.

In this condition, the master key is inserted in the key cylinder 28 and the main switch 30 is turned on (step S120 in Fig. 4). The ID reading circuit 12 reads the ID code of the master key (step S122), and the ID registration section 14C stores (that is, registers) the ID code as a master key in the memory 20 (step S 124). The CPU 14 sends an ignition permitting signal (a) to the ignition circuit 18 through the holding circuit 18A (step S126), enabling the engine 24 to start. Then, registration of the master key to the vehicle is completed, enabling shipment of the vehicle after final inspection (step S128).

When the main switch 30 is turned off to draw out the master key (step S130), the engine 24 is stopped, but the self-holding circuit 16A of the power source circuit 16 allows the controller to continue operating. Also, the elapsed time is monitored after the main switch 30 has been turned off, and when a predetermined time (10 sec) has elapsed (step S132), the self-holding circuit 16A is disconnected, the power supply of the controller 10 is cut off, and all the operation is finished (step S134).

When the all-clear key is inserted during operation of the self-holding circuit 16A (step S136), the ID code of the all-clear key is read in (step S138), and if the ID code coincides with an ID code of the all-clear key which has been stored in the memory 20, all the stored ID codes other than that of the all-clear key are erased from the memory 20 (step S140). Then, the all-clear key is drawn out, enabling re-registration of the master key (step S142). That is, another master key with a different ID code can be registered.

During steps S120-S126, transmission and reception of signals may be repeated several time for the ID code. In particular, reading of the ID code may be repeated a plurality of times when charging of the transponder 36 through the antenna 32 takes much time, or for prevention of misreading of the ID code. In such a case, the operation display section 26A is flashed at slow time intervals until an ignition permitting signal (a) is issued. This flashing is repeated at time intervals of 2 sec for 9 sec as shown in Fig. 8 by OPERATING CONDITION (3). That is, it is flashed 5 times.

Now, the procedure required in the case of replacement of the key cylinder 28, for example, when the key cylinder has been broken, will be described with reference to Fig.5. In this case, information in the controller 10 or the memory 20 is not altered. Here, an old master key is used for a "key with a particular ID code." After replacement of the key cylinder 28, a new key (unregistered) with a transponder suitable for a new key cylinder 28 is inserted and the main switch 30 is turned on (step S150).

Then, the controller 10 is switched on, and the ID code of the new key inserted is read in (step S152). This ID code has not been registered in the memory 20, so that as a result of comparison (step S154), it is determined that the ID code does not coincide with a registered ID code. While the elapsed time is within 5 sec after the main switch 30 is turned on, the operation display section 26A is lighted continuously (step S156), and after 5 second, an ignition prohibiting signal b is issued, the operating display section being switched to flashing at short time intervals (step S158). These operations are shown in Fig. 8 by OPERATING CONDITION (2).

In this condition, if the main switch 30 is turned off and the new key (unregistered) is drawn out (step S160), then the self-holding circuit 16A functions for 10 sec, and the controller 10 continues operating (step S162). Unless the all-clear key or the old master key is inserted during that time, that is, during the time the operation display section 26A is being flashed at short time intervals, the self-holding circuit 16A is disconnected and the power supply is cut off (step S164). If the all-clear key or the old master key is inserted during the time the operation display section 26A is being flashed at short time intervals (step S166), an ID code of the inserted key is read in (step S168). This ID code has been registered in the memory 20 of the controller 10, so that the CPU 14 erases all the registered ID codes (other than the ID code of the all-clear key) in the memory 20 (step S170).

After the all-clear key or the old key is drawn out (step S172), a new key can be registered as a master key according to a procedure similar to that of registration of a new master key as shown in Fig. 4. That is, the main switch is turned on with a new key (step S174), the ID code is read in (step S174), and this ID code is registered as an ID code of the new master key (step S178). The CPU 14 sends an ignition permitting signal (a) to the ignition circuit 18 through the holding circuit 18A to allow engine starting (step S180). After the main switch is turned off with the newly registered master key and the master key is drawn out (step S182), registration of sub-keys is performed as follows:

A sub-key 1 is registered, as described in Fig. 7 by FUNCTION (4) "Registration of sub-key ID," within a predetermined time (10 sec) after the main key is drawn out, another key with a transponder is inserted and the main switch 30 is turned on. Also, a sub-key 2 is registered according to the following procedure: within a predetermined time (10 sec) after the main switch 30 is turned off with the sub-key 1 and the sub-key 2 is drawn out, another key with a transponder is inserted to turn the main switch 30 on.

Although two sub-keys 1, 2 are usually used, if either of the two sub-keys is lost, a new sub-key may be registered according to the following procedure. That is, the main switch 30 is turned on with the sub-key which is left behind, then turned off, and within a predetermined time (10 sec), a new key with a transponder is inserted to turn the main switch on. In registration of sub-keys, if the operation display section 26A is flashed five times (9 sec) at time intervals of 2 sec within a period of time during which registration is possible, it is easily confirmed that registration is possible while the operation display section 16A is being flashed. When the second sub-key is registered, the operation display section 26A is not flashed, so that it can be determined from indication on the operation display section 26A whether the first or the second sub-key is registered.

Various operations described above are shown in Fig. 7 by comparison. Fig.2 illustrates a concept of registration/erasing of ID codes, showing that all of the ID codes stored in the memory 20 other than the one of the all-clear key are erased by the all-clear key at the time of shipment of the vehicle. A plurality of all-clear keys are preferably provided in the factory and kept by respective persons in charge. Line registration shows the procedure of registering a master key, as is shown in Fig.4. User registration and user re-registration are described in Fig.7 by FUNCTION (4).

Fig.8 shows description of operations displayed on the indicator 26, operating condition 1 states that in the ordinary use, for example, when the main switch 30 is turned on with a registered sub-key, or the second sub-key is to be registered, the operation display section 26A is not lighted. In this case, it is lighted if comparison is not finished in one communication act or registration is not completed in three successive communication acts. This lighting operation is changed as shown in Fig.8, depending on the operating conditions 1-4. As a result, it becomes possible to determine from the state of lighting what is the operating state at that time.

Now, referring to Fig.9, the function of the holding circuit 18A is described. The controller 10 operates (step S220) when the main switch 30 is turned on and then the power source on using the key which has been registered. If the ID determination section 14A determines that the ID code of the key is the correct ID code registered (step S222), an ignition permitting signal (a) is outputted to the holding circuit 18A (step S226). The holding circuit 18A maintains the signal (a) until the main switch 30 is turned off. The signal (a) is then sent to the ignition circuit 18.

Accordingly, the ignition circuit 18 usually controls the engine to allow the engine to operate (step S228). After running and turning the main switch off (step S228), the holding circuit 18A completes to hold the signal (a), and then the ignition circuit 18 stops the operation of the engine (step S232). The self-holding circuit 16A of the source circuit 16 operates during a predetermined time period after turning off of the main switch 30. ID code can be registered or re-registered within the predetermined time period of the self-holding circuit 16A (step S234), as described heretofore. If the self-holding time period is over, the power source is turned off to complete.

### [Effect of Invention]

According to the invention of claim 1 as described above, once the ignition permitting signal is output, it is held to enable the continuing operation of the engine until the main switch is turned off. Accordingly, even if in vehicle running, the computer is reset by noises or the like, temporal misfire (which leads to stoppage of the engine) and reduction in output of the engine are not occurred, allowing the vehicle to be operated smoothly.

### [Brief Description of the Drawings]

Fig.1 is a view showing the basic structure of a system according to an embodiment of this invention;
Fig.2 is a view showing a concept of registration and erasing operations of ID codes;
Fig.3 is a flow diagram of operations in the ordinary use;
Fig.4 is a flow diagram of operations in registration of a master key;
Fig.5 is a flow diagram of operations in registering the master key when the key cylinder is replaced;
Fig.6 is a view showing the structure of a controller;
Fig.7 is a comparative table of operating conditions and description of operations for various functions;
Fig.8 is a comparative table of the operating states of the system and their expressions; and
Fig.9 is a flow diagram showing the operation of a holding circuit.

### [Symbols]

10: Controller 12: ID reading circuit 14: CPU
14A: ID determination section 14B: ID erasing section
14C: ID registration section 16: Power source circuit
16A: Self-holding circuit 18: Ignition circuit as engine control section 18A: Holding circuit 20: Memory 24: Engine 26: Indicator 26A: Operation display section 28: Key cylinder 30: Main switch 32: Antenna 34: Key 36 : Transponder

[Object] To improve conform to ride by preventing the engine operation from being interfered in the meantime or reduced in engine speed causing unstable operation, even if, due to any noise generated during vehicle running, a computer mounted is reset or a command is generated to determine identification codes.

[Structure] A controller is so constituted that once an ignition permitting signal is output, it is held to enable the continuing operation of the engine until the main switch is turned off.

## Claims

1. A method of preventing car thefts providing a key cylinder (28) and a controller (10) mounted on a vehicle body, a key (34) insertable in said key cylinder (28) for switching on a main switch (30), and a built-in transponder (36) in said key (34) for identifying an ID code of said key (34) when said key (34) is inserted in said key cylinder (28), engine (24) starting being allowed when the ID code identified by said transponder (36) coincides with an ID code which has been registered in said controller (10), said method comprising the steps of:
reading an ID code of a key (34) accessing to said key cylinder (28);
determining whether or not the ID code read has been registered in a memory (20) and outputting an ignition permission signal when the code has been already registered;
holding said ignition permission signal in a holding circuit (18A) until said main switch (30) is switched off; and
controlling the engine (24) by an engine controlling means (14, 18) according to said ignition permission signal held in said holding circuit (18A), said engine controlling means (14, 18) comprising an ignition circuit (18),
wherein said ignition permission signal is directly input to said ignition circuit (18) from said holding circuit (18A).

2. A method according to claim 1, wherein ID codes of more than one key (34) are registered in said memory (20).

3. A method according to claim 2, wherein at least one of said registered ID codes is an ID code of a sub-key (34).

4. A method according to claim 2 or 3, wherein one of said registered ID codes is an ID code of a master key (34) which can be used to erase registered ID codes of sub-keys (34).

5. A method according to any one of claims 2 to 4, wherein one of said registered ID codes is an ID code of an all-clear key (34) which can be used to erase registered ID codes other than that of said all-clear key (34).

6. A device for preventing car thefts having a key cylinder (28) and a controller (10) mounted on a vehicle body, a key (34) insertable in said key cylinder (28) for switching on a main switch (30), and a built-in transponder (36) in said key (34) for identifying an ID code of said key (34) when said key (34) is inserted in said key cylinder (28), engine (24) starting being allowed when the ID code identified by said transponder (36) coincides with an ID code which has been registered in said controller (10), said device comprising:
a memory (20) in which the ID code of said key (34) is registered;
an ID reading circuit (12) for reading an ID code of a key (34) accessing to said key cylinder (28);
an ID determination section (14A) for determining whether or not the ID code read by said ID reading circuit (12) has been registered in said memory (20) and for outputting an ignition permission signal when the code has been already registered;
a holding circuit (18A) for holding said ignition permission signal until said main switch (30) is switched off; and
an engine controlling means (14, 18) for controlling the engine (24) according to said ignition permission signal held in said holding circuit (18A), said engine controlling means (14, 18) comprising an ignition circuit (18),
wherein said ignition permission signal is directly input to said ignition circuit (18) from said holding circuit (18A).

7. A device according to claim 6, wherein ID codes of more than one key (34) are registered in said memory (20).

8. A device according to claim 7, wherein at least one of said registered ID codes is an ID code of a sub-key (34).

9. A device according to claim 7 or 8, wherein one of said registered ID codes is an ID code of a master key (34) which can be used to erase registered ID codes of sub-keys (34).

10. A device according to any one of claims 7 to 9, wherein one of said registered ID codes is an ID code of an all-clear key (34) which can be used to erase registered ID codes other than that of said all-clear key (34).

## Patentansprüche

1. Verfahren zur Verhinderung von Autodiebstählen, das einen Schließzylinder (28) und eine Steuereinrichtung (10), die an einem Fahrzeugaufbau angebracht sind, einen in den Schließzylinder (28) einsteckbaren Schlüssel (34) zum Einschalten eines Hauptschalters (30) und einen eingebauten Transponder (36) in dem Schlüssel (34) zum Identifizieren eines ID-Codes des Schlüssels (34), wenn der Schlüssel (34) in den Schließzylinder (28) eingesteckt wird, bereitstellt, wobei ein Anlassen eines Motors (24) erlaubt wird, wenn der durch den Transponder (36) identifizierte ID-Code mit einem ID-Code zusammenfällt, der in der Steuereinrichtung (10) registriert worden ist, wobei das Verfahren die Schritte umfaßt:
Lesen eines ID-Codes eines Schlüssels (34), der in den Schließzylinder (28) eintritt;
Bestimmen, ob der gelesene ID-Code in einem Speicher (20) registriert worden ist oder nicht, und Ausgeben eines Zünderlaubnissignals, wenn der Code bereits registriert worden ist;
Halten des Zünderlaubnissignals in einer Halteschaltung (18A), bis der Hauptschalter (30) ausgeschaltet wird; und
Steuern des Motors (24) durch eine Motorsteuereinrichtung (14, 18) gemäß dem in der Halteschaltung (18A) gehaltenen Zünderlaubnissignal,
wobei die Motorsteuereinrichtung (14, 18) eine Zündschaltung (18) umfaßt,
wobei das Zünderlaubnissignal von der Halteschaltung (18A) direkt in die Zündschaltung (18) eingegeben wird.

2. Verfahren nach Anspruch 1, wobei ID-Codes von mehr als einem Schlüssel (34) in dem Speicher (20) registriert sind.

3. Verfahren nach Anspruch 2, wobei zumindest einer der registrierten ID-Codes ein ID-Code eines Nebenschlüssels (34) ist.

4. Verfahren nach Anspruch 2 oder 3, wobei einer der registrierten ID-Codes ein ID-Code eines Hauptschlüssels (34), der zum Löschen registrierter ID-Codes von Nebenschlüsseln (34) verwendet werden kann, ist.

5. Verfahren nach einem der Ansprüche 2 bis 4, wobei einer der registrierten ID-Codes ein ID-Code eines Alles-Zurücksetzen-Schlüssels (34), der zum Löschen von von dem ID-Code des Alles-Zurücksetzen-Schlüssels (34) verschiedenen registrierten ID-Codes verwendet werden kann, ist.

6. Vorrichtung zur Verhinderung von Autodiebstählen, die einen Schließzylinder (28) und eine Steuereinrichtung (10), die an einem Fahrzeugaufbau angebracht sind, einen in den Schließzylinder (28) einsteckbaren Schlüssel (34) zum Einschalten eines Hauptschalters (30) und einen eingebauten Transponder (36) in dem Schlüssel (34) zum Identifizieren eines ID-Codes des Schlüssels (34), wenn der Schlüssel (34) in den Schließzylinder (28) eingesteckt wird, aufweist, wobei ein Anlassen eines Motors (24) erlaubt wird, wenn der durch den Transponder (36) identifizierte ID-Code mit einem ID-Code zusammenfällt, der in der Steuereinrichtung (10) registriert worden ist, wobei die Vorrichtung umfaßt:
einen Speicher (20), in dem der ID-Code des Schlüssels (34) registriert ist;
eine ID-Leseschaltung (12) zum Lesen eines ID-Codes eines Schlüssels (34), der in den Schließzylinder (28) eintritt;
einen ID-Bestimmungsabschnitt (14A) zum Bestimmen, ob der durch die ID-Leseschaltung (12) gelesene ID-Code in dem Speicher (20) registriert worden ist oder nicht, und zum Ausgeben eines Zünderlaubnissignals, wenn der Code bereits registriert worden ist;
eine Halteschaltung (18A) zum Halten des Zünderlaubnissignals, bis der Hauptschalter (30) ausgeschaltet wird; und
eine Motorsteuereinrichtung (14, 18) zum Steuern des Motors (24) gemäß dem in der Halteschaltung (18A) gehaltenen Zünderlaubnissignal, wobei die Motorsteuereinrichtung (14, 18) eine Zündschaltung (18) umfaßt,
wobei das Zünderlaubnissignal von der Halteschaltung (18A) direkt in die Zündschaltung (18) eingegeben wird.

7. Vorrichtung nach Anspruch 6, wobei ID-Codes von mehr als einem Schlüssel (34) in dem Speicher (20) registriert sind.

8. Vorrichtung nach Anspruch 7, wobei zumindest einer der registrierten ID-Codes ein ID-Code eines Nebenschlüssels (34) ist.

9. Vorrichtung nach Anspruch 7 oder 8, wobei einer der registrierten ID-Codes ein ID-Code eines Hauptschlüssels (34), der zum Löschen registrierter ID-Codes von Nebenschlüsseln (34) verwendet werden kann, ist.

10. Vorrichtung nach einem der Ansprüche 7 bis 9, wobei einer der registrierten ID-Codes ein ID-Code eines Alles-Zurücksetzen-Schlüssels (34), der zum Löschen von von dem ID-Code des Alles-Zurücksetzen-Schlüssels (34) verschiedenen registrierten ID-Codes verwendet werden kann, ist.

## Revendications

1. Procédé de prévention de vols de voiture prévoyant un barillet à clé (28) et un contrôleur (10) montés sur une carrosserie de véhicule, une clé (34) pouvant être insérée dans ledit barillet à clé (28) permettant une activation d'un interrupteur principal (30) et un transpondeur intégré (36) dans ladite clé (34), destiné à identifier un code d'identification de ladite clé (34) quand ladite clé (34) est insérée dans ledit barillet à clé (28), un démarrage du moteur (24) étant autorisé quand le code d'identification identifié par ledit transpondeur (36) correspond à un code d'identification qui a été enregistré dans ledit contrôleur (10), ledit procédé comprenant les étapes consistant à :
lire un code d'identification d'une clé (34) accédant audit barillet à clé (28);
déterminer si la lecture du code d'identification a ou non été enregistrée dans une mémoire (20) et émettre un signal d'autorisation d'allumage quand le code a déjà été enregistré ;
maintenir ledit signal d'autorisation d'allumage dans un circuit de maintien (18A) jusqu'à ce que ledit interrupteur principal (30) soit désactivé ; et
commander le moteur (24) à l'aide de moyens de commande de moteur (14, 18) en fonction dudit signal d'autorisation d'allumage maintenu dans ledit circuit de maintien (18A), lesdits moyens de commande de moteur (14, 18) comprenant un circuit d'allumage (18),
dans lequel ledit signal d'autorisation d'allumage est présenté directement audit circuit d'allumage (18) à partir dudit circuit de maintien (18A).

2. Procédé selon la revendication 1, dans lequel des codes d'identification de plus d'une clé (34) sont enregistrés dans ladite mémoire (20).

3. Procédé selon la revendication 2, dans lequel au moins un desdits codes d'identification enregistrés est un code d'identification d'une clé secondaire (34).

4. Procédé selon la revendication 2 ou 3, dans lequel un desdits codes d'identification enregistrés est un code d'identification d'une clé principale (34) qui peut s'utiliser pour effacer des codes d'identification enregistrés de clés secondaires (34).

5. Procédé selon l'une quelconque des revendications 2 à 4, dans lequel un desdits codes d'identification enregistrés est un code d'identification d'une clé d'effacement total (34) qui peut s'utiliser pour effacer des codes d'identification enregistrés différents de celui de ladite clé d'effacement total (34).

6. Dispositif de prévention de vols de voiture ayant un barillet à clé (28) et un contrôleur (10) montés sur une carrosserie de véhicule, une clé (34) pouvant être insérée dans ledit barillet à clé (28) permettant une activation d'un interrupteur principal (30) et un transpondeur intégré (36) dans ladite clé (34), destiné à identifier un code d'identification de ladite clé (34) quand ladite clé (34) est insérée dans ledit barillet à clé (28), un démarrage du moteur (24) étant autorisé quand le code d'identification identifié par ledit transpondeur (36) correspond à un code d'identification qui a été enregistré dans ledit contrôleur (10), ledit dispositif comprenant :
une mémoire (20) dans laquelle le code d'identification de ladite clé (34) est enregistré ;
un circuit de lecture d'identification (12) destiné à lire un code d'identification d'une clé (34) accédant audit barillet à clé (28) ;
une section de détermination d'identification (14A) destinée à déterminer si la lecture du code d'identification par ledit circuit de lecture d'identification (12) a ou non été enregistrée dans ladite mémoire (20) et émettre un signal d'autorisation d'allumage quand le code a déjà été enregistré ;
un circuit de maintien (18A) destiné à maintenir ledit signal d'autorisation d'allumage jusqu'à ce que ledit interrupteur principal (30) soit désactivé ; et
des moyens de commande de moteur (14, 18) destinés à commander le moteur (24) en fonction dudit signal d'autorisation d'allumage maintenu dans ledit circuit de maintien (18A), lesdits moyens de commande de moteur (14, 18) comprenant un circuit d'allumage (18),
dans lequel ledit signal d'autorisation d'allumage est présenté directement audit circuit d'allumage (18) à partir dudit circuit de maintien (18A).

7. Dispositif selon la revendication 6, dans lequel des codes d'identification de plus d'une clé (34) sont enregistrés dans ladite mémoire (20).

8. Dispositif selon la revendication 7, dans lequel au moins un desdits codes d'identification enregistrés est un code d'identification d'une clé secondaire (34).

9. Dispositif selon la revendication 7 ou 8, dans lequel un desdits codes d'identification enregistrés est un code d'identification d'une clé principale (34) qui peut s'utiliser pour effacer des codes d'identification enregistrés de clés secondaires (34).

10. Dispositif selon l'une quelconque des revendications 7 à 9, dans lequel un desdits codes d'identification enregistrés est un code d'identification d'une clé d'effacement total (34) qui peut s'utiliser pour effacer des codes d'identification enregistrés différents de celui de ladite clê d'effacement total (34).
